# EUROPÄISCHE PATENTSCHRIFT

(11) **EP 3 983 169 B1**
(45) Veröffentlichungstag und Bekanntmachung des Hinweises auf die Patenterteilung: **09.08.2023**
(21) Anmeldenummer: 20733909.4
(22) Anmeldetag: 10.06.2020
(51) Int. Cl.: B23Q 1/00

(54) **SPANNVORRICHTUNG UND WERKSTÜCKHALTEVORRICHTUNG MIT EINER SPANNVORRICHTUNG**
CLAMPING DEVICE AND WORKPIECE HOLDING DEVICE WITH A CLAMPING DEVICE
DISPOSITIF DE SERRAGE ET DISPOSITIF DE MAINTIEN DE PIÈCE COMPRENANT UN DISPOSITIF DE SERRAGE

(30) Priorität: 14.06.2019 DE 102019116262
(43) Veröffentlichungstag der Anmeldung: 20.04.2022
(73) Patentinhaber: Lang Technik GmbH, 73271 Holzmaden (DE)
(72) Erfinder: LANG, Günter, 73249 Wernau (DE); LANG, Philipp, 73271 Holzmaden (DE)
(74) Vertreter: Rüger Abel Patentanwälte PartGmbB
(86) Internationale Anmeldenummer: PCT/EP2020/066101
(87) Internationale Veröffentlichungsnummer: WO 2020/249621

(56) Entgegenhaltungen:
- WO-A1-03/039807
- DE-A1-102014 112 843
- DE-U1-202018 105 390
- US-A- 5 167 405

## Beschreibung

Die Erfindung betrifft eine Spannvorrichtung für das Spannen eines Tragkörpers. Der Tragkörper kann eine Halteeinrichtung für das Halten eines Werkstücks aufweisen. Mit solchen Spannvorrichtungen können an einem Tragkörper gehaltene Werkstücke in einer Werkzeugmaschine positionsgenau gespannt werden. Insbesondere können in unterschiedlichen Bearbeitungsstationen oder unterschiedlichen Werkzeugmaschinen Spannvorrichtungen vorhanden sein, so dass ein einheitliches Spannen in allen Stationen oder Werkzeugmaschinen ermöglicht ist.

Eine derartige Spannvorrichtung ist beispielsweise aus WO 03/039807 A bekannt. Die Spannvorrichtung hat einen Grundkörper mit einer Anlagefläche und Aufnahmelöchern für Spannbolzen des Tragkörpers. Jedem Aufnahmeloch ist ein Spannkörper mit einem Spannende und einem Betätigungsende zugeordnet. Das Spannende jedes Spannkörpers kann einen in einem Aufnahmeloch angeordneten Spannbolzen beaufschlagen und somit den Tragkörper am Grundkörper aufspannen.

Bei einem Ausführungsbeispiel der aus WO 03/039807 A1 bekannten Spannvorrichtung sind die Spannkörper jeweils paarweise angeordnet und werden entlang einer gemeinsamen Achse in einer Bewegungsrichtung zwischen einer Spannstellung und einer Freigabestellung bewegt. Sämtliche Spannkörper sind in dieser Bewegungsrichtung parallel zueinander bewegbar gelagert. Bei anderen Ausführungsbeispielen sind die Spannkörper derart angeordnet, dass sich ihre Längsachsen in einem gemeinsamen Mittelpunkt schneiden. Die Spannkörper können über einen gemeinsamen Hydraulikzylinder oder einen gemeinsamen Rotor mit mehreren Kurvenflächen beaufschlagt bzw. bewegt werden.

Die bekannte Spannvorrichtung hat sich bewährt. Es kann ausgehend vom Stand der Technik als Aufgabe der vorliegenden Erfindung angesehen werden, die Präzision des Spannens zu verbessern und gleichzeitig einen einfachen Aufbau der Spannvorrichtung zu gewährleisten.

Diese Aufgabe wird durch eine Spannvorrichtung mit den Merkmalen des Patentanspruches 1 sowie eine Werkstückhaltevorrichtung mit den Merkmalen des Patentanspruches 15 gelöst.

Die erfindungsgemäße Spannvorrichtung ist für das Spannen eines Tragkörpers eingerichtet. Sie hat einen Grundkörper mit einer Spannseite. An der Spannseite weist der Grundkörper eine Anlagefläche auf. Die Anlagefläche ist dazu eingerichtet, mit einer Gegenanlagefläche des Tragkörpers zur Anlage zu gelangen, wenn der Tragkörper am Grundkörper gespannt ist. Die Anlagefläche kann zusammenhängend sein oder durch mehrere mit Abstand zueinander angeordnete Flächenabschnitte gebildet sein. Die Anlagefläche ist vorzugsweise parallel zu einer Ebene ausgerichtet, die durch eine erste Richtung und eine zweite Richtung aufgespannt ist.

An der Spannseite hat der Grundkörper außerdem mehrere zur Spannseite offene Aufnahmelöcher. Die Aufnahmelöcher können in die Anlagefläche münden oder benachbart mit Abstand zur Anlagefläche angeordnet sein. Jedes Aufnahmeloch ist dazu eingerichtet, einen Spannbolzen des Tragkörpers zumindest teilweise aufzunehmen. Vorzugsweise erstrecken sich die Aufnahmelöcher parallel zueinander in einer Richtung rechtwinklig zur Anlagefläche.

Im oder am Grundkörper sind mehrere Spannkörper angeordnet. Vorzugsweise ist jedem Aufnahmeloch genau ein Spannkörper zugeordnet. Die Spannkörper sind entlang ihrer Längsachse linear bewegbar gelagert. Die Spannvorrichtung hat eine Betätigungseinrichtung, die dazu eingerichtet ist, sämtliche Spannkörper zwischen einer Spannstellung und einer Freigabestellung zu bewegen. Jeder Spannkörper hat ein Spannende, das einem der Aufnahmelöcher zugeordnet ist und das in der Spannstellung in das zugeordnete Aufnahmeloch hineinragt. In der Freigabestellung ist jeder Spannkörper weiter von der Mittelachse des Aufnahmelochs entfernt und das Spannende ragt nicht oder weniger weit in das Aufnahmeloch hinein als in der Spannstellung.

Die Längsachsen der Spannkörper einer gemeinsamen Spannkörpergruppe bilden mehrere Schnittpunkte, insbesondere mindestens drei und vorzugsweise vier Schnittpunkte. Durch die Anordnung der Längsachsen der Spannkörper derart, dass mehrere Schnittpunkte gebildet sind, lässt sich eine sehr genaue Positionierung erreichen. Es lassen sich auch verbleibende Ungenauigkeiten in einem rotatorischen Freiheitsgrad um eine Achse eliminieren, die rechtwinklig zur Anlagefläche ausgerichtet ist. Beim Stand der Technik sind die Längsachsen entweder deckungsgleich oder schneiden sich in einem einzigen Schnittpunkt. Wenn sich aber alle Längsachsen in einem gemeinsamen Punkt schneiden, verbleibt abhängig von der Fertigungsgenauigkeit eine Positionierungenauigkeit um eine Achse, die durch den Schnittpunkt aller Längsachsen der Spannkörper hindurch verläuft.

Die Spannkörper können mehrere Spannkörpergruppen bilden. Die Längsachsen der Spannkörper einer gemeinsamen Spannkörpergruppe können jeweils einen Schnittpunkt bilden. Bei zwei Spannkörpergruppen werden beispielsweise ein erster Schnittpunkt und ein zweiter Schnittpunkt gebildet. Der erste Schnittpunkt und der zweite Schnittpunkt sind vorzugsweise entlang einer sich in einer ersten Richtung erstreckenden Geraden angeordnet.

Die Längsachse eines Spannkörpers der einen Spannkörpergruppe bildet vorzugsweise mit einer Längsachse eines Spannkörpers der anderen Spannkörpergruppe einen dritten Schnittpunkt. Die Längsachsen zweier anderer Spannkörper dieser Spannkörpergruppen können einen vierten Schnittpunkt bilden. Der dritte Schnittpunkt und der vierte Schnittpunkt können auf einer gemeinsamen Geraden liegen, die vorzugsweise in die zweite Richtung ausgerichtet ist.

Es ist vorteilhaft, wenn mehrere Spannkörpergruppen mit jeweils zwei Spannkörpern vorhanden sind. Beispielsweise kann eine erste Spannkörpergruppe mit einem ersten Spannkörper und einem zweiten Spannkörper vorhanden sein, sowie eine zweite Spannkörpergruppe mit einem dritten Spannkörper und einem vierten Spannkörper. Es ist insbesondere vorteilhaft, wenn die Längsachsen der Spannkörper mindestens vier Schnittpunkte bilden. Vorzugsweise stellen diese vier Schnittpunkte die Ecken eines Polygons dar, das insbesondere die Form einer Raute hat.

Bei einer bevorzugten Ausführungsform hat jeder Spannkörper ein seinem Spannende entgegengesetztes Betätigungsende, das einem Betätigungskörper der Betätigungseinrichtung zugeordnet ist und bevorzugt an diesem Betätigungskörper anliegt. Der wenigstens eine Betätigungskörper der Betätigungseinrichtung ist vorzugsweise in der ersten Richtung linear bewegbar gelagert. Er ist dazu eingerichtet, die Betätigungsenden mehrerer Spannkörper einer gemeinsamen Spannkörpergruppe zu beaufschlagen. Vorzugsweise weist die Spannkörpergruppe genau zwei Spannkörper auf. Weiter vorzugsweise sind mehrere Spannkörpergruppen und insbesondere genau zwei Spannkörpergruppen vorhanden, denen jeweils ein Betätigungskörper zugeordnet ist. Durch das Verschieben des Betätigungskörpers können die Spannkörper der zugeordneten Spannkörpergruppe ebenfalls verschoben werden, um diese zwischen der Freigabestellung und der Spannstellung umzuschalten. Die Längsachsen der Spannkörper einer gemeinsamen Spannkörpergruppe sind insbesondere weder parallel zueinander, noch deckungsgleich angeordnet. Sie erstrecken sich schräg zueinander und schräg zur ersten Richtung und/oder schräg zur zweiten Richtung. Insbesondere sind zwei Betätigungskörper vorhanden, die jeweils in erster Richtung bewegbar gelagert sind.

Mittels des Betätigungskörpers können die Spannkörper zwischen der Freigabestellung und der Spannstellung bewegt werden. In der Spannstellung ist jeder Spannkörper dazu eingerichtet, einen im Aufnahmeloch angeordneten Spannbolzen zu beaufschlagen, insbesondere mit einer Kraft, die Kraftkomponenten rechtwinklig zur Anlagefläche, in die erste Richtung und in die zweite Richtung aufweist.

Durch diese schräge Ausrichtung der Längsachsen der Spannkörper ist eine einfache Möglichkeit geschaffen, die Spannbolzen mit Kraftkomponenten zu beaufschlagen, die in zwei Raumrichtungen, beispielsgemäß der ersten Richtung und der zweiten Richtung wirken. Dadurch kann der Tragkörper relativ zum Grundkörper in der ersten Richtung und der zweiten Richtung, in der sich die Anlagefläche erstreckt, exakt positioniert werden.

Die Betätigungseinrichtung arbeitet vorzugsweise mechanisch und ist insbesondere frei von fluidischen Kraftübertragungseinheiten. Bevorzugt ist die Kopplung zwischen dem wenigstens einen Betätigungskörper und den zugeordneten Spannkörpern nur eine Druck- oder Schubkräfte übertragende Kopplung und somit keine Zugkräfte übertragende Kopplung. Das heißt, der Betätigungskörper kann die zugeordneten Spannkörper einer gemeinsamen Spannkörpergruppe schiebend beaufschlagen, insbesondere zum Umschalten der Spannkörper in die jeweilige Spannstellung, kann aber keine Zugkraft für eine entgegengesetzte Bewegung ausüben. Insbesondere ist der Betätigungskörper dazu eingerichtet, die zugeordneten Spannkörper von der Freigabestellung in die Spannstellung zu schieben, ohne Zugkopplung zu den Spannkörpern, um diese von der Spannstellung zurück in die Freigabestellung ziehen zu können. Dadurch ergibt sich eine sehr einfache mechanische Ausgestaltung der Betätigungseinrichtung.

Durch die mechanische Betätigungseinrichtung wird jeder Spannkörper weggesteuert in die jeweilige Spannstellung bewegt. Es kann sichergestellt werden, dass die Verschiebungswege der Spannkörper einer gemeinsamen Spannkörpergruppe gleich groß sind. Zudem lässt sich auch sicherstellen, dass die Verschiebewege sämtlicher Spannkörper in ihre jeweilige Spannstellung gleich groß sind. Dies erhöht die Präzision beim Spannen. Durch das Betätigen der Spannkörper mit wenigstens einem linear verschiebbaren Betätigungskörper und das Vorsehen einer oder mehrerer Spannkörpergruppen können die Aufnahmelöcher problemlos auch mit großem Abstand in der ersten Richtung und/oder der zweiten Richtung voneinander entfernt angeordnet werden. Die Spannkraft wird mechanisch aufrechterhalten. Die Betätigungseinrichtung ist vorzugsweise selbsthemmend. Dadurch wird ein versehentliches Lösen oder Freigeben der Spannkörper bzw. Bewegen der Spannkörper aus ihrer Spannstellung weg verhindert.

Vorzugsweise liegt ein Betätigungskörper unmittelbar an den Betätigungsenden der Spannkörper der zugeordneten Spannkörpergruppe an.

Die Betätigungseinrichtung hat vorzugsweise eine einzige Antriebsquelle, beispielsweise ein von einer Bedienperson oder einem Roboter betätigbares Antriebselement, wobei die Antriebsquelle beim Antreiben sämtliche Spannkörper von einer Freigabestellung in die jeweilige Spannstellung bewegen kann. Zwischen dieser Antriebsquelle und den Spannkörpern besteht beispielsweise eine Keilgetriebekopplung.

Es ist außerdem vorteilhaft, wenn wenigstens eines der Aufnahmelöcher in der ersten Richtung mit Abstand von einem der anderen Aufnahmelöcher angeordnet ist und/oder wenigstens eines der Aufnahmelöcher in der zweiten Richtung mit Abstand von einem der anderen Aufnahmelöcher angeordnet ist. Vorzugsweise definieren die Aufnahmelöcher die Ecken eines Polygons. Die Anzahl der Aufnahmelöcher ist insbesondere eine gerade Zahl. Bevorzugt sind vier Aufnahmelöcher vorhanden.

Es ist außerdem vorteilhaft, wenn wenigstens eine Längsachse eines Spannkörpers und insbesondere alle Längsachsen aller Spannkörper schräg zur ersten Richtung und schräg zur zweiten Richtung ausgerichtet sind. Dadurch kann über sämtliche Spannkörper eine Kraft auf die Spannbolzen eingeleitet werden, die eine Kraftkomponente sowohl in der ersten Richtung, als auch in der zweiten Richtung aufweist.

Es ist außerdem vorteilhaft, wenn der wenigstens eine Betätigungskörper ein dem Betätigungsenden der Spannkörper der zugeordneten Spannkörpergruppe zugeordnetes vorderes Ende aufweist. An dem vorderen Ende ist wenigstens eine sich schräg zur ersten Richtung und/oder zur zweiten Richtung erstreckende Schrägfläche vorhanden. Durch diese Schrägfläche kann eine Keilflächengetriebekopplung zwischen dem Betätigungskörper und den mit dem Betätigungskörper in Kontakt stehenden Spannkörpern erreicht werden. Die Anlage zwischen der wenigstens einen Schrägfläche und dem jeweiligen Spannende eines Spannkörpers ist vorzugsweise flächig, kann alternativ aber auch linienförmig oder punktförmig sein.

Es ist vorteilhaft, wenn die Betätigungseinrichtung einen Hauptkörper aufweist, der zur Beaufschlagung des wenigstens einen Betätigungskörpers eingerichtet ist. Insbesondere ist der Hauptkörper verschiebbar bzw. linear bewegbar gelagert. Vorzugsweise ist der Hauptkörper in der zweiten Richtung linear bewegbar gelagert.

Der Hauptkörper kann wenigstens eine sich schräg zur ersten Richtung und/oder zur zweiten Richtung erstreckende Hauptkörperfläche aufweisen. An dieser Hauptkörperfläche kann der wenigstens eine Betätigungskörper vorzugsweise flächig anliegen oder alternativ linienförmig oder punktförmig anliegen.

Vorzugsweise ist ein einziger Hauptkörper zur Betätigung bzw. Verschiebung sämtlicher vorhandener Betätigungskörper vorhanden. Über den Hauptkörper kann die Umschaltbewegung sämtlicher Spannkörper zwischen der Freigabestellung und der Spannstellung eingeleitet werden.

Der Hauptkörper, der wenigstens eine Betätigungskörper und die Spannkörper sind somit linear verschiebbar gelagert entweder in der ersten Richtung oder in der zweiten Richtung oder schräg zur ersten Richtung und zur zweiten Richtung. Diese Betätigungseinrichtung lässt sich sehr einfach in einen plattenförmigen Grundkörper integrieren und ist flach und bauraumsparend ausführbar.

Die Spannvorrichtung weist einen weiteren erfinderischen Aspekt auf, der unabhängig von den vorstehenden Ausrichtung und Anordnungen der Spannkörper, des wenigstens einen Betätigungskörpers und des Hauptkörpers realisierbar ist. In dem Grundkörper ist dabei wenigstens ein Führungskanal vorhanden, wobei in jedem Führungskanal ein Spannkörper angeordnet ist. Der wenigstens eine Betätigungskörper und/oder der Hauptkörper können zusätzlich auch in jeweils einem weiteren Führungskanal angeordnet sein.

Jeder Führungskanal hat zwei sich gegenüberliegende aneinander zugewandte Kanalwände. Vorzugsweise sind die Kanalwände durch sich gegenüberliegende Nutseitenwände gebildet, die innerhalb des Grundkörpers über einen Nutboden miteinander verbunden sind. Gegenüberliegend dem Nutboden ist die Nut offen und vorzugsweise durch einen lösbar am Grundkörper anbringbaren Deckel verschlossen. In jeder Kanalwand ist ein Führungswandabschnitt vorhanden. Der Spannkörper bzw. der Betätigungskörper bzw. der Hauptkörper liegt lediglich im Bereich der beiden sich gegenüberliegenden Führungswandabschnitte am Führungskanal an und ist ansonsten mit Abstand zu den Kanalwänden angeordnet. Vorzugsweise besteht auch ein Abstand zwischen dem Boden und/oder dem Deckel und dem im Führungskanal angeordneten Körper, also dem Spannkörper bzw. dem Betätigungskörper bzw. dem Hauptkörper. Dadurch lässt sich die Reibung zwischen dem Führungskanal und dem jeweils darin verschiebbar angeordneten Körper definiert einstellen bzw. minimieren. Die Kontur des Führungskanals ist daher vorzugsweise lediglich in den Bereichen der Führungswandabschnitte an die Außenkontur des darin verschiebbar gelagerten Körpers (d.h. Spannkörper bzw. Betätigungskörper bzw. Hauptkörper) angepasst. Außerhalb der Führungswandabschnitte kann der Führungskanal eine beliebige Kontur aufweisen und beispielsweise können die Kanalwände außerhalb der Führungswandabschnitte parallel zueinander ausgerichtet sein und sich jeweils parallel zu einer gemeinsamen Mittelebene erstrecken, die sich mittig entlang des Führungskanals erstreckt.

Die Führungswandabschnitte können vorzugsweise rinnenförmig ausgebildet sein. Die konkav gekrümmte Rinne kann einen Radius aufweisen, der an den Außenradius eines Außenflächenbereichs des verschiebbar gelagerten Spannkörpers bzw. Betätigungskörpers bzw. Hauptkörpers angepasst ist.

Vorzugsweise haben die Spannkörper und/oder Betätigungskörper und/oder Hauptkörper zwischen ihren entgegengesetzten Enden einen zylindrischen Abschnitt, der an den Führungswandabschnitten anliegt.

Bei allen vorstehend beschriebenen Ausführungsformen der Spannvorrichtung kann es vorteilhaft sein, wenn eine Vorspannanordnung vorhanden ist. Die Vorspannanordnung kann die Spannkörper in ihre jeweilige Freigabestellung vorspannen bzw. drängen. In ihrer nicht durch den wenigstens einen Betätigungskörper beaufschlagten Ausgangslage nehmen die Spannkörper daher ihre Freigabestellung ein. Vorzugsweise hat die Vorspannanordnung für jede Spannkörpergruppe ein Vorspannelement und insbesondere genau ein Vorspannelement. Das Vorspannelement stützt sich bei einer bevorzugten Ausführungsform unmittelbar an den Spannkörpern der Spannkörpergruppe ab und ist insbesondere nicht unmittelbar am Grundkörper befestigt oder am Grundkörper abgestützt. Bei einem Ausführungsbeispiel bewirkt das Vorspannelement eine Zugkraft zwischen den Spannkörpern der Spannkörpergruppe zum jeweiligen Betätigungskörper hin. Beispielsweise kann das Vorspannelement eine Zugfeder sein. Insbesondere ist die Betätigungseinrichtung ansonsten frei von Vorspannelementen, die ausschließlich an den Spannkörpern angreifen bzw. an den Spannkörpern angeordnet sind.

Eine erfindungsgemäße Werkstückhaltevorrichtung weist eine Spannvorrichtung nach einem der vorstehend beschriebenen Ausführungsbeispiele auf. Außerdem ist ein Tragkörper mit einer Halteseite und einer Anbringungsseite vorhanden. Die Anbringungsseite ist bevorzugt von der Halteseite abgewandt bzw. entgegengesetzt zur Halteseite am Tragkörper vorhanden. Der Tragkörper kann beispielsweise als Tragplatte ausgebildet sein. An der Anbringungsseite ist eine Gegenanlagefläche vorhanden. Die Gegenanlagefläche ist dazu eingerichtet, bei hergestellter Verbindung zwischen dem Tragkörper und der Spannvorrichtung an der Anlagefläche des Grundkörpers anzuliegen. An der Anbringungsseite ragen mehrere Spannbolzen von dem Tragkörper weg. Vorzugsweise erstrecken sich die Spannbolzen parallel zueinander. Die Anzahl der Spannbolzen entspricht insbesondere der Anzahl der Aufnahmelöcher. Bei hergestellter Verbindung ragt jeweils ein Spannbolzen in ein Aufnahmeloch hinein. Das Anordnungsmuster bzw. die Abstände zwischen den Spannbolzen entsprechen daher dem Anordnungsmuster bzw. den Abständen zwischen den Aufnahmelöchern.

Insbesondere hat jeder Spannbolzen eine Beaufschlagungsfläche, die beispielsweise durch eine Konusmantelfläche gebildet sein kann. Die wenigstens eine Beaufschlagungsfläche erstreckt sich schräg zur Erstreckungsrichtung des jeweiligen Spannbolzens. Ist der Spannbolzen im zugeordneten Aufnahmeloch angeordnet, erstreckt sich die Beaufschlagungsfläche schräg zur ersten Richtung und schräg zur zweiten Richtung und schräg zur Erstreckungsrichtung des Spannbolzens. Beaufschlagt der zugeordnete Spannkörper die Beaufschlagungsfläche beim Spannen des Tragkörpers an dem Grundkörper, entstehen Kraftkomponenten in alle drei Raumrichtungen. Rechtwinklig zur ersten Richtung und rechtwinklig zur zweiten Richtung wird die Gegenanlagefläche gegen die Anlagefläche gezogen. Gleichzeitig wird der Spannbolzen durch den Spannkörper in die erste Richtung und die zweite Richtung gedrückt. Die Spannbolzen werden somit parallel zu ihrer Erstreckungsrichtung mit einer Zugkraft beaufschlagt und gleichzeitig voneinander weg in die erste Richtung und die zweite Richtung gedrückt, so dass eine exakte Positionierung und Ausrichtung des Tragkörpers am Grundkörper erfolgt.

Vorteilhafte Ausgestaltungen der Erfindung ergeben sich aus den abhängigen Patentansprüchen, der Beschreibung und den Zeichnungen. Nachfolgend werden bevorzugte Ausführungsbeispiele der Erfindung anhand der beigefügten Zeichnungen im Einzelnen erläutert. Es zeigen:

Figur 1 eine schematische Seitenansicht eines Ausführungsbeispiels einer Werkstückhaltevorrichtung aufweisend eine Trägerplatte mit einer Halteeinrichtung für ein Werkstück, sowie eine Spannvorrichtung für die Trägerplatte,

Figur 2 eine teilgeschnittene Darstellung der Spannvorrichtung aus Figur 2, die einen Spannkörper und ein zugeordnetes Aufnahmeloch mit einem darin angeordneten Spannbolzen zeigt, wobei sich der Spannkörper in einer Freigabestellung befindet,

Figur 3 die Darstellung aus Figur 2, wobei sich der Spannkörper in einer Spannstelldung befindet,

Figur 4 eine schematische Darstellung der Spannvorrichtung aus Figur 1 in einem Schnitt quer durch die Aufnahmelöcher,

Figur 5 eine schematische Darstellung der von einem Spannkörper auf einen Spannbolzen eingeleiteten Kraftkomponenten in einer ersten Richtung und einer zweiten Richtung,

Figur 6 eine schematische Darstellung der Ausrichtung der Längsachsen der Spannkörper und die Bildung mehrerer Schnittpunkte durch die Längsachsen der Spannkörper und

Figur 7 eine schematische Teildarstellung des Grundkörpers der Spannvorrichtung aus den Figuren 1 und 4 in einem Querschnitt durch einen Führungskanal für einen Spannkörper

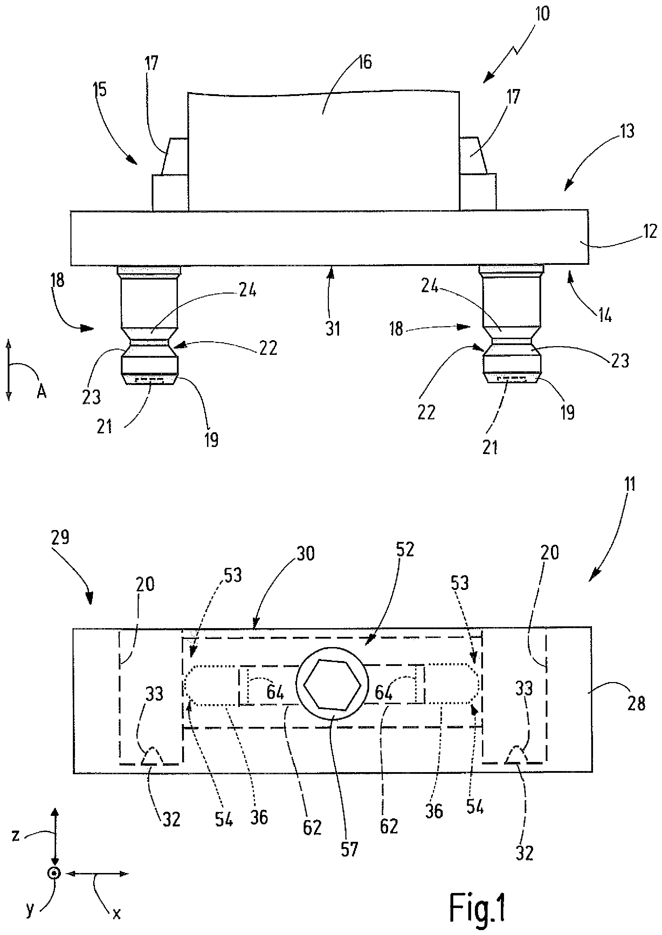

Figur 1 zeigt schematisch ein Ausführungsbeispiel einer Werkstückhaltevorrichtung 10 mit einer Spannvorrichtung 11 und einem Tragkörper 12. Der Tragkörper 12 hat eine Halteseite 13 und abgewandt von der Halteseite 13 eine Anbringungsseite 14. Der Tragkörper 12 kann als Tragplatte ausgebildet sein, wobei die Halteseite 13 und die Anbringungsseite 14 durch die entgegengesetzten Seiten der Tragplatte gebildet sind. An der Halteseite 13 weist der Tragkörper 12 eine Halteeinrichtung 15 zum Halten eines Werkstücks 16 auf. Die Halteeinrichtung 15 kann beispielsweise Klemmbacken 17 aufweisen, um das Werkstück 16 klemmend am Tragkörper 12 zu halten.

An der Anbringungsseite 14 hat der Tragkörper 12 mehrere Spannbolzen 18, die von dem Tragkörper 12 weg ragen. Beim Ausführungsbeispiel sind die Spannbolzen 18 parallel zueinander ausgerichtet und erstrecken sich in einer Axialrichtung A bezüglich des Tragkörpers 12. Jeder Spannbolzen 18 kann wenigstens einen zylindrischen Abschnitt aufweisen. An einem von dem Tragkörper 12 abgewandten Ende hat jeder Spannbolzen 18 eine Fase bzw. eine sich konisch verjüngenden Endabschnitt 19. Dadurch wird das Einführen des Spannbolzens 18 in ein zugeordnetes Aufnahmeloch 20 der Spannvorrichtung 11 vereinfacht. An dem freien Ende kann jeder Spannbolzen 18 in der Stirnfläche eine Stirnflächenaussparung 21 aufweisen.

Jeder Spannbolzen 18 hat außerdem wenigstens eine Beaufschlagungsfläche 22. Die Beaufschlagungsfläche 22 erstreckt sich schräg geneigt zur Axialrichtung A. Beim veranschaulichten Ausführungsbeispiel hat jeder Spannbolzen 18 genau eine Beaufschlagungsfläche 22, die durch die Außenfläche eines konischen Abschnitts 23 des Spannbolzens 18 gebildet ist. Der konische Abschnitt 23 erweitert sich in Axialrichtung A von dem Tragkörper 12 weg zum freien Ende des Spannbolzens 18 hin. Der konische Abschnitt 23 ist beispielsgemäß mit Abstand zum Tragkörper 12 und zum Endabschnitt 19 angeordnet. Zwischen dem konischen Abschnitt 23 und dem Tragkörper 12 kann ein sich verjüngender Abschnitt 24 des Spannbolzens 18 vorhanden sein. Der sich verjüngende Abschnitt 24 kann ebenfalls durch die Außenfläche eines Konus gebildet sein. Zwischen dem sich verjüngenden Abschnitt 24 und dem konischen Abschnitt 23 kann ein zylindrischer Abschnitt vorhanden sein. Alternativ können der sich verjüngende Abschnitt 24 und der konische Abschnitt 23 auch unmittelbar ineinander übergehen. Dadurch ist mit Abstand vom Endabschnitt 19 und mit Abstand zur Tragplatte 12 eine Einschnürung am Spannbolzens 18 gebildet.

Die Spannvorrichtung 11 hat einen Grundkörper 28. An einer Spannseite 29 hat der Grundkörper 28 eine Anlagefläche 30. Die Anlagefläche 30 ist dazu eingerichtet, mit einer am Tragkörper 12 vorhandenen Gegenanlagefläche 31 zur Anlage zu gelangen, wenn der Tragkörper 12 mittels der Spannbolzen 18 an der Spannvorrichtung 11 bzw. dem Grundkörper 28 angeordnet bzw. gespannt ist. Vorzugsweise erstreckt sich die Anlagefläche 30 in einer Ebene, die durch eine erste Richtung x und eine zweite Richtung y aufgespannt ist. Die erste Richtung x und die zweite Richtung y sind auf ein Koordinatensystem der Spannvorrichtung 11 bzw. des Grundkörpers 28 bezogen. In diesem Koordinatensystem ist eine dritte Richtung z rechtwinklig zur ersten Richtung x und zur zweiten Richtung y ausgerichtet. Bei hergestellter Verbindung zwischen dem Tragkörper 12 und der Spannvorrichtung 11 erstrecken sich die Spannbolzen 18 in etwa in der dritten Richtung z.

Die Gegenanlagefläche 31 erstreckt sich vorzugsweise in einer Ebene, die rechtwinklig zur Axialrichtung A ausgerichtet ist. Die Anlagefläche 30 und die Gegenanlagefläche 31 sind zur flächigen Anlage aneinander eingerichtet. Alternativ zu dieser Ausführung ist es auch möglich den Grundkörper 28 und/oder die Tragplatte 12 derart auszugestalten, dass bei hergestellter Verbindung zwischen der Tragplatte 12 und der Spannvorrichtung 11 anstelle einer flächigen Anlage an mehreren Stellen und beispielsweise mindestens oder genau drei mit Abstand zueinander angeordneten Kontaktstellen ein linienhafter oder punktförmiger Kontakt gebildet ist. Zum Beispiel könnte die Anlagefläche 30 oder die Gegenanlagefläche 31 drei konvexe, insbesondere kalottenförmige Erhebungen aufweisen an denen die jeweils andere Fläche (d.h. Gegenanlagefläche 31 bzw. Anlagefläche 30) punktförmig anliegt.

Für jeden vorhandenen Spannbolzen 18 ist im Grundkörper 28 ein zugeordnetes Aufnahmeloch 20 vorhanden, das zur Spannseite 29 hin offen ist. Beim Ausführungsbeispiel münden die Aufnahmelöcher 20 in die Anlagefläche 30. Die Aufnahmelöcher 20 sind beim Ausführungsbeispiel als Sacklöcher ausgebildet und auf der der Spannseite 29 entgegengesetzten Unterseite des Grundkörpers 28 durch jeweils einen Lochboden 32 geschlossen. Am Lochboden 32 ist optional ein elastisch verformbares Element 33 angeordnet, das in das Aufnahmeloch vorsteht und einen zugeordneten Spannbolzen 18 in der dritten Richtung z mit einer Kraft beaufschlagt, wenn der Spannbolzen 18 vollständig im Aufnahmeloch 20 angeordnet ist und die Gegenanlagefläche 31 an der Anlagefläche 30 anliegt. Die Kraft in die dritte Richtung z kann durch die elastische Verformung des Elements 33 hervorgerufen werden. Das elastisch verformbare Element 33 kann dabei in die Stirnflächenaussparung 21 des zugeordneten Spannbolzens 18 eingreifen. Durch diese Kraft kann das Lösen der Spannverbindung zwischen dem Tragkörper 12 und der Spannvorrichtung 11 vereinfacht werden.

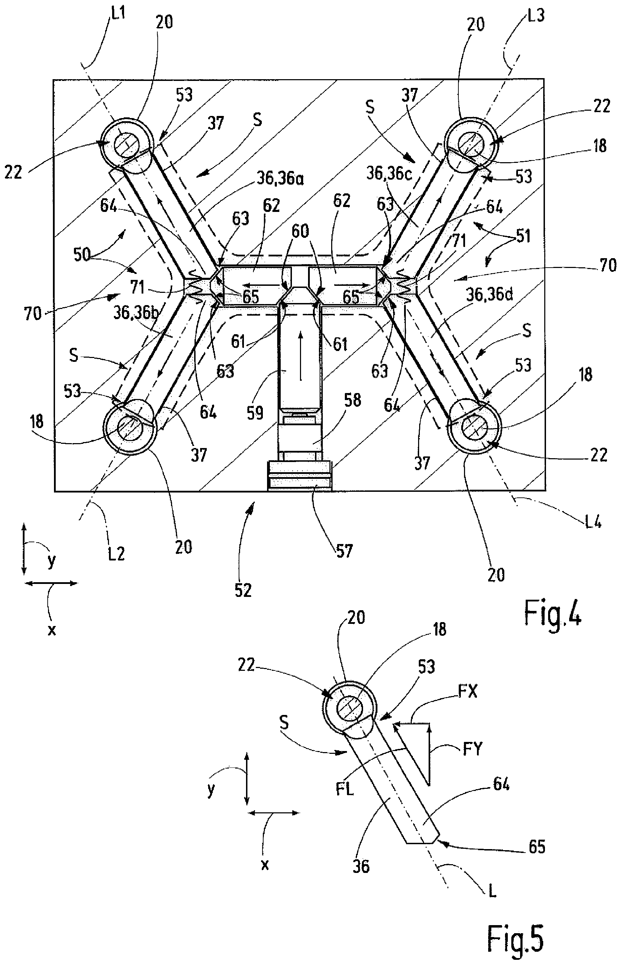

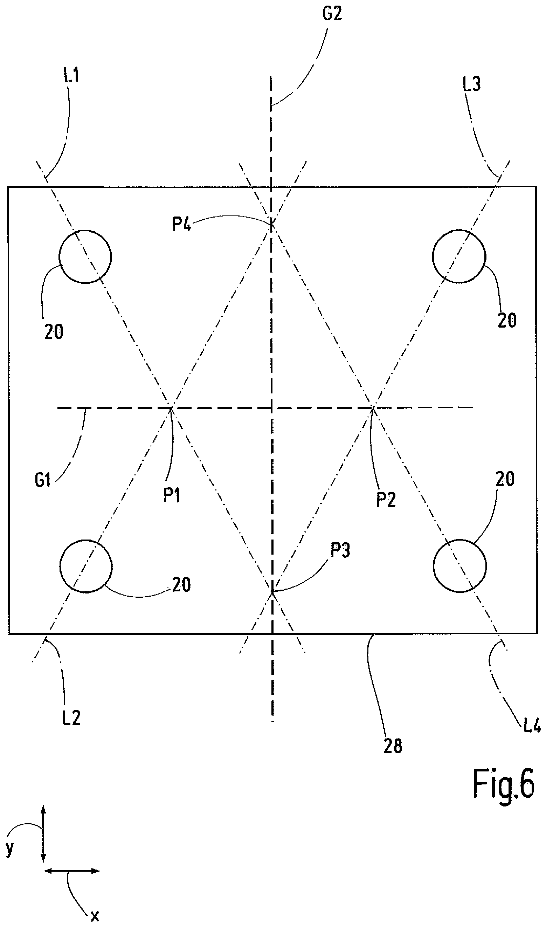

Die Spannvorrichtung 11 hat beim Ausführungsbeispiel vier Aufnahmelöcher 20. Die Aufnahmelöcher 20 bilden beispielsgemäß die Eckpunkte eines Rechtecks (Figuren 4 und 6). Dementsprechend sind an dem Tragkörper 12 vier Spannbolzen 18 vorhanden, deren Anordnung und Abstand der Anordnung und dem Abstand der Aufnahmelöcher 20 entspricht.

Die Spannvorrichtung 11 hat mehrere Spannkörper 36, die linear verschiebbar an und beispielsgemäß in dem Grundkörper 28 angeordnet sind. Jeder Spannkörper 36 ist in einem Führungskanal 37 geführt bewegbar gelagert. Die Führungskanäle 37 sind in den Grundkörper 28 eingebracht, vorzugsweise durch Fräsen. Jeder Führungskanal 37 für einen Spannkörper 36 mündet in ein Aufnahmeloch 20.

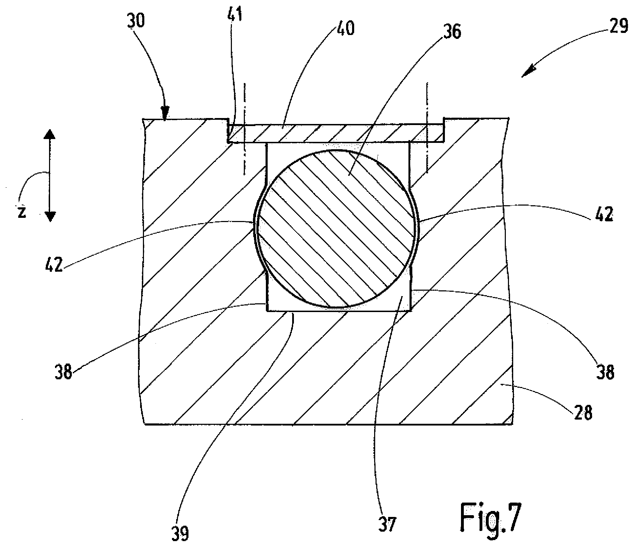

Die Führungskanäle 37 sind beim Ausführungsbeispiel nutförmig und haben zwei sich gegenüberliegende Kanalwände 38, die über einen Kanalboden 39 miteinander verbunden sind (Figur 7). Auf der dem Kanalboden 39 gegenüberliegenden Seite ist der Führungskanal 37 zur Spannseite 29 hin offen und beispielsgemäß durch einen Deckel 40 verschlossen. Der Deckel 40 ist derart angeordnet, dass er in die dritte Richtung z nicht über die Ebene hinaus ragt, in der sich die Anlagefläche 30 bzw. bei hergestellter Verbindung mit dem Tragkörper 12 die Gegenanlagefläche 31 erstreckt. Vorzugsweise ist die auf der Spannseite 29 zugängliche Außenfläche des Deckels 40 mit Abstand zur Anlagefläche 30 angeordnet. Alternativ dazu kann die auf der Spannseite 29 zugängliche Außenfläche des Deckels 40 einen Abschnitt der Anlagefläche 30 bilden. Der Deckel 40 ist vorzugsweise in einer Deckelaufnahme 41 angeordnet im Anschluss an die Spannseite 29. Die Deckelaufnahme 41 bildet eine Vertiefung bzw. Aussparung im Grundkörper 28 und hat Auflageflächen für den Deckel 40, um den Deckel 40 am Grundkörper 28 befestigen zu können, beispielsweise mittels einer Schraubverbindung.

Jede Kanalwand 38 hat einen Führungswandabschnitt 42. Außerhalb des jeweiligen Führungswandabschnitts 42 erstreckt sich die Kanalwand 38 beispielsgemäß in einer Ebene, die beim Ausführungsbeispiel parallel zur dritten Richtung z ausgerichtet ist. Außerhalb des jeweiligen Führungswandabschnitts 42 besteht vorzugsweise kein Kontakt zwischen dem Spannkörper 36 und der Kanalwand 38. Vorzugsweise besteht außerhalb der Führungswandabschnitte 42 kein Kontakt zwischen dem Spannkörper 36 und dem Kanalboden 39 und/oder dem Deckel 40.

Die Führungswandabschnitte 42 sind beim Ausführungsbeispiel rinnenförmig ausgebildet. Entsprechend sind die an den Führungswandabschnitten 42 anliegenden Bereiche des geführten Spannkörpers 36 konvex gekrümmt. Mit Blick auf die Kanalwand 38 kann jeder Führungswandabschnitt 42 mit einem Radius konkav gekrümmt sein, der dem Außenradius eines zylindrischen oder teilzylindrischen Abschnitts des Spannkörpers 36 entspricht. Durch die beiden sich gegenüberliegenden Führungswandabschnitte 42 kann der Spannkörper 36 daher in den Führungswandabschnitten 42 bewegbar geführt im Führungskanal 37 angeordnet sein.

Die Führungswandabschnitte 42 sind vorzugsweise unmittelbar durch einen Bereich bzw. das Material des Grundkörpers 28 gebildet.

Es sei an dieser Stelle darauf hingewiesen, dass die Anordnung der Spannkörper 36 in den Führungskanälen 37, wie es vorstehend anhand der Figur 7 beschrieben wurde, unabhängig von anderen Ausgestaltungsmerkmalen der Spannvorrichtung 11 realisiert werden kann.

Bei dem hier veranschaulichten Ausführungsbeispiel ist jedem vorhandenen Aufnahmeloch 20 genau ein Spannkörper 36 zugeordnet (Figur 4). Die vorhandenen Spannkörper 36 bilden mehrere Spannkörpergruppen, wobei beim Ausführungsbeispiel eine erste Spannkörpergruppe 50 und eine zweite Spannkörpergruppe 51 vorhanden sind. Jede Spannkörpergruppe 50, 51 hat beim Ausführungsbeispiel genau zwei Spannkörper 36. Ein erster Spannkörper 36a und ein zweiter Spannkörper 36b gehören zur ersten Spannkörpergruppe 50 und ein dritter Spannkörper 36c und ein vierter Spannkörper 36d gehören zur zweiten Spannkörpergruppe 51. Der erste Spannkörper 36a hat eine erste Längsachse L1 und ist im zugeordneten Führungskanal 37 entlang seiner ersten Längsachse L1 bewegbar gelagert. Der zweite Spannkörper 36b hat eine zweite Längsachse L2 und ist im zugeordneten Führungskanal 37 entlang der zweiten Längsachse L2 bewegbar gelagert. Der dritte Spannkörper 36c hat eine dritte Längsachse L3 und ist im zugeordneten Führungskanal 37 entlang der dritten Längsachse L3 bewegbar gelagert. Der vierte Spannkörper 36d hat eine vierte Längsachse L4 und ist im zugeordneten Führungskanal 37 entlang der vierten Längsachse L4 bewegbar gelagert. Wenn nachfolgend von der Längsachse L eines Spannkörpers 36 die Rede ist, ist die jeweilige Längsachse L1 bzw. L2 bzw. L3 bzw. L4 der ersten bzw. zweiten bzw. dritte bzw. vierten Spannkörpers gemeint.

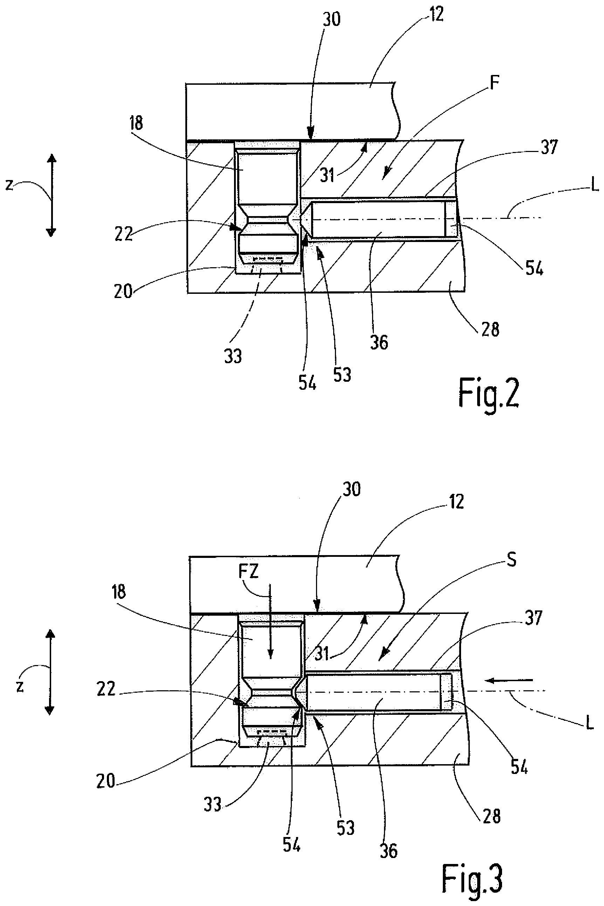

Mittels einer Betätigungseinrichtung 52 der Spannvorrichtung 11 ist jeder Spannkörper 36 zwischen einer Freigabestellung F (Figuren 1 und 2) und einer Spannstellung S (Figuren 3-5) bewegbar. In der Spannstellung S greift der Spannkörper 36 in das zugeordnete Aufnahmeloch 20 ein und kann einen dort angeordneten Spannbolzen 18 beaufschlagen, um den Tragkörper 12 mit dem Werkstück 16 am Grundkörper 28 der Spannvorrichtung 11 festzuspannen. Hierfür weist jeder Spannkörper 36 beim Ausführungsbeispiel ein dem Aufnahmeloch 20 zugeordnetes Spannende 53 auf. An dem Spannende 53 hat der Spannkörper 36 eine sich schräg zur Längsachse L des Spannkörpers 36 erstreckende Spannfläche 54. Die Spannfläche 54 ist außerdem gegenüber der dritten Richtung z geneigt und verläuft vorzugsweise parallel zur zweiten Richtung y. Die Spannfläche 54 kann gegenüber der dritten Richtung z in etwa dieselbe Neigung aufweisen, wie die Beaufschlagungsfläche 22 gegenüber der Axialrichtung A. Dadurch kann ein flächiger oder linienförmiger Kontakt zwischen der Spannfläche 54 des Spannkörpers 36 und der Beaufschlagungsfläche 22 des Spannbolzens 18 hergestellt werden.

Wie es in Figur 3 zu erkennen ist, wird durch die schräg zur dritten Richtung z ausgerichteten Flächen 22, 54 eine Zugkraft FZ auf den Spannbolzen 18 erzeugt, die wiederum für das Aneinanderdrücken der Anlagefläche 30 und der Gegenanlagefläche 31 sorgt. Damit ist in dieser dritten Richtung z eine sehr genaue Positionierung des Tragkörpers 12 am Grundkörper 28 der Spannvorrichtung 11 gewährleistet.

In den Figuren 4 und 5 ist außerdem zu erkennen, dass ein Spannkörper 36 in der Spannstellung S außerdem eine Längskraft FL auf den zugeordneten Spannbolzen 18 ausübt, die entlang bzw. parallel zur jeweiligen Längsachse L ausgerichtet ist. Wie es in Figur 4 veranschaulicht ist, erstrecken sich sämtliche Längsachsen L, also die erste Längsachse L1, die zweite Längsachse L2, die dritte Längsachse L3 und die vierte Längsachse L4 jeweils schräg geneigt zur ersten Richtung x und zur zweiten Richtung y. Dadurch weist die Längskraft FL eine erste Kraftkomponente FX in die erste Richtung x und eine zweite Kraftkomponente FY in die zweite Richtung y auf (Figur 5). Somit wird jeder Spannbolzen 18 durch die Beaufschlagung mit einem sich in der Spannstellung S befindenden Spannkörpers 36 sowohl mit einer Zugkraft FZ in der dritten Richtung z, als auch mit einer ersten Kraftkomponente FX in der ersten Richtung x, als auch mit einer zweiten Kraftkomponente FY in der zweiten Richtung y beaufschlagt. Die Spannbolzen 18 werden daher sowohl in die erste Richtung x, als auch in die zweite Richtung y voneinander weg gedrängt, wenn sich die Spannkörper 36 in der Spannstellung S befinden. Dadurch ist eine sehr genaue Positionierung des Tragkörpers 12 mit dem Werkstück 16 in der ersten Richtung x und der zweiten Richtung y am Grundkörper 28 der Spannvorrichtung 11 gewährleistet.

Diese Positionierung wird weiterhin dadurch verbessert und präziser, dass die Längsachsen L der Spannkörper 36 mehrere mit Abstand voneinander angeordnete Schnittpunkte bilden, wie es schematisch in Figur 6 veranschaulicht ist. Die erste Längsachse L1 des ersten Spannkörpers 36a und die zweite Längsachse L2 des Spannkörpers 36b, die beide zur ersten Spannkörpergruppe 50 gehören, bilden einen ersten Schnittpunkt P1. Die dritte Längsachse L3 des dritten Spannkörpers 36c und die vierte Längsachse L4 des vierten Spannkörpers 36d, die beide zur zweiten Spannkörpergruppe 51 gehören, bilden einen zweiten Schnittpunkt P2. Bei dem hier beschriebenen Ausführungsbeispiel liegen der erste Schnittpunkt P1 und der zweite Schnittpunkt P2 auf einer gemeinsamen ersten Geraden G1, die sich parallel zur ersten Richtung x erstreckt.

Beim Ausführungsbeispiel bilden die erste Längsachse L1 des ersten Spannkörpers 36a und die dritte Längsachse L3 des dritten Spannkörpers 36c einen dritten Schnittpunkt P3. Die zweite Längsachse L2 des zweiten Spannkörpers 36b und die vierte Längsachse L4 des vierten Spannkörpers 36d bilden einen vierten Schnittpunkt P4. Der dritte Schnittpunkt P3 und der vierte Schnittpunkt P4 sind somit durch Längsachsen L1 und L3 bzw. L2 und L4 gebildet, die zu Spannkörpern 36a und 36c bzw. 36b und 36d unterschiedlicher Spannkörpergruppen 50 bzw. 51 gehören. Beispielsgemäß liegen der dritte Schnittpunkt P3 und der vierte Schnittpunkt P4 auf einer gemeinsamen zweiten Geraden G2, die sich in die zweite Richtung y erstreckt.

Die vier Schnittpunkte P1 bis P4 bilden beim Ausführungsbeispiel die Eckpunkte einer Raute in einer Ebene parallel zur Anlagefläche 30. Der Abstand zwischen dem ersten Schnittpunkt P1 und dem zweiten Schnittpunkt P2 ist bevorzugt verschieden von dem Abstand zwischen dem dritten Schnittpunkt P3 und dem vierten Schnittpunkt P4.

Beim Ausführungsbeispiel schneiden sich die beiden Geraden G1 und G2 in einem Mittelpunkt, der auch den Schnittpunkt der die Aufnahmelöcher 20 verbindenden Geraden darstellt.

Durch das Bilden mehrerer Schnittpunkte P1 bis P4 durch die Längsachsen L1 bis L4 der Spannkörper 36 wird auch ein rotativer Freiheitsgrad um eine sich in der dritten Richtung z erstreckenden Achse sehr gut eliminiert und die Positioniergenauigkeit des Tragkörpers 12 gegenüber dem Grundkörper 28 weiter erhöht.

Die Anordnung und Ausrichtung der Längsachsen L der Spannkörper 36 und die Bildung der Schnittpunkte P1 bis P4 kann unabhängig von anderen Ausgestaltungen der Spannvorrichtung 11 bzw. der Werkzeughaltevorrichtung 10 erfolgen.

Ein Ausführungsbeispiel der Betätigungseinrichtung 52 ist in Figur 4 veranschaulicht. Die Betätigungseinrichtung 52 hat vorzugsweise eine einzige Antriebsquelle, um sämtliche Spannkörper 36 zwischen der Freigabestellung F und der Spannstellung S umzuschalten. Somit befinden sich sämtliche Spannkörper 36 in der Freigabestellung F, wenn sich einer der Spannkörper 36 in der Freigabestellung F befindet und umgekehrt befinden sich sämtliche Spannkörper 36 in der Spannstellung S, wenn sich einer der Spannkörper 36 in der Spannstellung S befindet. Als Antriebsquelle dient beim Ausführungsbeispiel eine Betätigungsschraube 57, die drehbar in einer Mutter 58 gelagert ist. Die Mutter 58 sitzt drehfest am Grundkörper 28. Durch die Drehung der Betätigungsschraube 57 kann die Betätigungsschraube 57 daher entlang ihrer Drehachse verschoben werden, die sich beim Ausführungsbeispiel in die zweite Richtung y erstreckt. Mittels der Betätigungsschraube 57 kann ein daran anliegender Hauptkörper 59 linear parallel zu seiner Erstreckung und beispielsgemäß in die zweite Richtung y verschoben werden. Zwischen dem Hauptkörper 59 und der Betätigungsschraube 57 besteht dabei ein Anlagekontakt.

Die Betätigungsschraube 57 kann beispielsweise mittels eines Werkzeugs gedreht werden. Das Werkzeug kann von einer Bedienperson bedient werden. Das Werkzeug kann auch an einem Roboterarm oder einer anderen Maschineneinrichtung vorhanden sein.

An seinem der Betätigungsschraube 57 entgegengesetzten Ende hat der Hauptkörper 59 wenigstens eine und beim Ausführungsbeispiel zwei schräg zur zweiten Richtung y und schräg zur ersten Richtung x ausgerichtete Hauptkörperflächen 60. Der Hauptkörper verjüngt sich durch die beiden Hauptkörperflächen keilförmig zu seinem Ende hin. Die Hauptkörperflächen 60 sind jeweils als Anlagefläche für eine Betätigungskörperendfläche 61 eines Betätigungskörpers 62 eingerichtet. Beispielsgemäß ist die Neigung und Ausrichtung der Betätigungskörperendfläche 61 eines jeweiligen Betätigungskörpers 62 parallel zu der Hauptkörperfläche 60 ausgerichtet, an der die Betätigungskörperendfläche 61 anliegt. Jede Betätigungskörperendfläche 61 ist daher schräg zur ersten Richtung x und schräg zur zweiten Richtung y ausgerichtet. Die Hauptkörperflächen 60 und die Betätigungskörperendflächen 61 sind vorzugsweise ebene Flächen und erstrecken sich beispielsgemäß parallel zur dritten Richtung z.

Die Betätigungseinrichtung 52 weist für jede vorhandene Spannkörpergruppe 50, 51 einen Betätigungskörper 62 auf. Beim Ausführungsbeispiel sind daher zwei separate Betätigungskörper 62 vorhanden. Jeder Betätigungskörper 62 ist beispielsgemäß linear verschiebbar gelagert. Die beiden Betätigungskörper 62 sind beim Ausführungsbeispiel in die erste Richtung x linear verschiebbar gelagert. Wie es insbesondere in Figur 4 zu erkennen ist, können die Betätigungskörper 62 entlang einer gemeinsamen Achse angeordnet sein. An ihrem einen Ende weisen sie jeweils die Betätigungskörperendfläche 61 und am in der ersten Richtung x entgegengesetzten vorderen Ende wenigstens eine Schrägfläche 63 auf. Für jeden Spannkörper 36 der zugeordneten Spannkörpergruppe 50, 51 ist eine Schrägfläche 63 vorhanden. Somit hat jeder Betätigungskörper 62 beim Ausführungsbeispiel zwei Schrägflächen 63. Die Schrägflächen 63 eines Betätigungskörpers 62 sind jeweils schräg zur ersten Richtung x und zur zweiten Richtung y ausgerichtet und bevorzugt als ebene Flächen ausgebildet, die sich parallel zur dritten Richtung z erstrecken. Durch die beiden Schrägflächen 63 verjüngt sich der Betätigungskörper 62 keilförmig zu dem freien Ende hin, das den Spannkörpern 36 zugeordnet ist.

Jeder Spannkörper 36 hat an seinem dem Spannende 53 entgegengesetzten Betätigungsende 64 eine Spannkörperendfläche 65, die zur Anlage mit der zugeordneten Schrägfläche 63 eingerichtet ist. Die Spannkörperendfläche 65 ist jeweils geneigt zur ersten Richtung x und geneigt zur zweiten Richtung y und beispielsgemäß parallel zur dritten Richtung z ausgerichtet und entspricht in ihrer Neigung und Ausrichtung der zugeordneten Schrägfläche 63.

Die Betätigungseinrichtung 52 bildet daher ein Keilflächengetriebe zwischen dem Hauptkörper 59 und dem Betätigungskörpern 62 sowie zwischen den Betätigungskörpern 62 und den Spannkörpern 36. Die Verbindung zwischen dem Hauptkörper 59 und den Betätigungskörpern 62 ist ausschließlich ein Anlagekontakt und kann keine Zugkräfte übertragen. Die Verbindung zwischen den Betätigungskörpern 62 und den Spannkörpern 36 ist ein Anlagekontakt und kann keine Zugkräfte übertragen.

Die Betätigungseinrichtung 52 ist ohne fluidische Kraftübertragung ausgebildet. Sie weist keine Fluidkomponenten wie Kolben oder Zylinder auf. Die Betätigungseinrichtung 52 arbeitet beispielsgemäß rein mechanisch.

Die Spannvorrichtung 11 hat außerdem eine Vorspannanordnung 70. Die Vorspannanordnung 70 ist dazu eingerichtet, die Spannkörper 36 in ihre Freigabestellung F vorzuspannen bzw. zu drängen. Dazu können die Spannkörper 36 mit einer elastischen Kraft beaufschlagt werden, die die Spannkörper 36 entlang ihrer jeweiligen Längsachse L vom jeweils zugeordneten Aufnahmeloch 20 weg in die Freigabestellung F zieht oder drückt.

Bei dem hier gezeigten Ausführungsbeispiel ist jeder Spannkörpergruppe 50, 51 ein Vorspannelement 71 der Vorspannanordnung 70 zugeordnet. Zwei Vorspannelemente 71 sind daher ausreichend. Die Vorspannelemente 71 stützen sich beim Ausführungsbeispiel nicht unmittelbar am Grundkörper 28 ab, sondern verbinden die Spannkörper 36 derselben Spannkörpergruppe 50 bzw. 51 unmittelbar. Somit verbindet ein erstes Vorspannelement 71 den ersten Spannkörper 36a mit dem zweiten Spannkörper 36b und ein zweites Vorspannelement 71 verbindet den dritten Spannkörper 36c mit dem vierten Spannkörper 36d. Die Vorspannelemente 71 bewirken eine Zugkraft und sind im Bereich des Betätigungsendes an den Spannkörpern 36 befestigt. Durch die Zugkraft der Vorspannelemente 71 werden die Spannkörperendflächen 65 der Spannkörper 36 einer gemeinsamen Spannkörpergruppe 50 bzw. 51 gegen die jeweils zugeordnete Schrägfläche 63 des Betätigungskörpers 62 gedrängt, der der Spannkörpergruppe 50 bzw. 51 zugeordnet ist. Dies führt wiederum dazu, dass die Betätigungskörperendflächen 61 der Betätigungskörper 62 gegen die jeweils zugeordnete Hauptkörperfläche 60 des Hauptkörpers 59 gedrängt werden, um die mittels der Vorspannelemente 71 auf die Betätigungskörper 62 wirkende Kraft abzustützen. Der Hauptkörper 59 stützt die einwirkende Kraft an der Betätigungsschraube 57 ab. Die Betätigungsschraube 57 stützt die Kraft über die Mutter 58 am Grundkörper 28 ab. Die Gewindeverbindung zwischen der Betätigungsschraube 57 und der Mutter 58 ist selbsthemmend, so dass die auf die Betätigungsschraube 57 in die zweite Richtung y wirkende Kraft nicht dazu führen kann, dass sich die Betätigungsschraube 57 in der zweiten Richtung y bewegt. Zwischen dem Hauptkörper 59 und den Betätigungskörpern 62 einerseits und zwischen den Betätigungskörpern 62 und den Spannkörpern 36 andererseits besteht daher beim Ausführungsbeispiel stets ein Anlagekontakt.

Alternativ zu der in Figur 4 veranschaulichten Ausführungsform könnte auch jedem Spannkörper 36 ein separates Vorspannelement 71 zugeordnet sein, das sich am Grundkörper 28 abstützt. Bei dem veranschaulichten Ausführungsbeispiel können die Vorspannelemente 71 Zugfedern sein, beispielsweise Spiralfedern, die in Aussparungen der Spannkörper 36 angeordnet sind, die zum jeweiligen Betätigungsende 64 hin offen sind. Die Aussparungen sind der Übersichtlichkeit halber in Figur 4 nicht veranschaulicht.

Die Betätigungseinrichtung 52 arbeitet wie folgt:

In einer zurückgezogenen Stellung des Hauptkörpers 59 befinden sich die Betätigungskörper 62 in der ersten Richtung x ausreichend nahe nebeneinander, das die daran anliegenden Spannkörper 36 durch die Vorspannanordnung 70 in die Freigabestellung F gedrängt werden und die Aufnahmelöcher 20 zum Einfügen der Spannbolzen 18 freigeben. Nach dem Anordnen der Spannbolzen 18 in den Aufnahmelöchern 20 kann durch das Betätigen der Betätigungsschraube 57 der Hauptkörper 59 in die zweite Richtung y bewegt werden und die beiden Betätigungskörper 62 voneinander weg verschieben. Dies führt wiederum dazu, dass die an den Schrägflächen 63 anliegenden Spannkörper 36 entlang ihrer jeweiligen Längsachse L in das zugeordnete Aufnahmeloch 20 und in die Spannstellung S bewegt werden. Durch die Steigung des Schraubengewindes zwischen der Betätigungsschraube 57 und der Mutter 58 ist die Betätigungseinrichtung 52 selbsthemmend ausgebildet. Unabhängig von der auf den linear verschiebbar gelagerten Hauptkörper 59 ausgeübten Kraft in die zweite Richtung y, bleibt die Betätigungsschraube 57 gegenüber der Mutter 58 in ihrer axialen Position und hält die Spannstellung S damit aufrecht. Denn durch die mechanische Anlage zwischen den Spannkörpern 36 an den Betätigungskörpern 62 und den Betätigungskörpern 62 am Hauptkörper 59 ist ein Auflösen dieser Spannstellung mechanisch blockiert.

Das Lösen der Spannverbindung erfolgt dadurch, dass die Betätigungsschraube 57 in Löserichtung gedreht wird, wodurch sich der Hauptkörper 59 in die zweite Richtung y derart bewegt werden kann, dass ein aneinander annähern der beiden Betätigungskörper 62 in die erste Richtung x möglich ist. Der Hauptkörper 59 wird sozusagen aus dem Zwischenraum zwischen den beiden Betätigungskörpern 62 zumindest teilweise herausbewegt. Dadurch werden die Betätigungskörper 62 in die erste Richtung x aufeinander zu bewegt, was durch die Kraft der Vorspannanordnung 70 und beispielsgemäß der beiden Vorspannelemente 71 bewirkt wird. Dies führt wiederum dazu, dass jeder Spannkörper 36 entlang seiner betreffenden Längsachse L von dem zugeordneten Aufnahmeloch 20 wegbewegt wird und seine Freigabestellung F einnehmen kann.

In der Freigabestellung F werden die Spannbolzen 18 nicht durch die Spannkörper 36 am Grundkörper 28 gehalten. Die optional vorhandenen elastisch verformbaren Elemente 33 bewirken, dass die Spannbolzen 18 aus den Aufnahmelöchern 20 zumindest etwa herausgedrängt werden, um das Entfernen des Tragkörpers 12 von der Spannvorrichtung 11 zu vereinfachen.

In Bezug auf die Figur 7 wurde die Führung der Spannkörper 36 in Führungskanälen 37 erläutert. Zusätzlich oder alternativ zu dieser Führung der Spannkörper 36 können auf diese Weise auch der wenigstens eine Betätigungskörper 62 und/oder der Hauptkörper 59 geführt werden. Es ist somit auch möglich, für jeden vorhandenen Betätigungskörper 62 bzw. für den beispielsgemäß vorhandenen Hauptkörper 59 einen Führungskanal 37 vorzusehen, wie er anhand der Figur 7 für den bzw. die Spannkörper 36 beschrieben und erläutert wurde.

Die Erfindung betrifft eine Spannvorrichtung 11 und ist zum lösbaren Spannen eines Tragkörpers 12 eingerichtet, an dem ein Werkstück 16 angeordnet werden kann. Die Spannvorrichtung 11 hat einen Grundkörper 28 mit Aufnahmelöchern 20 zur Aufnahme jeweils eines Spannbolzens 18 des Tragkörpers 12. Jeder Spannkörper 36 ist entlang seiner Längsachse L zwischen einer Spannstellung S und einer Freigabestellung F linear bewegbar. Das Bewegen von der Freigabestellung F in die Spannstellung S und/oder umgekehrt von der Spannstellung S in die Freigabestellung F kann mittels einer Betätigungseinrichtung 52 erfolgen. Jeder Spannkörper 36 hat ein Spannende 53, das in der Spannstellung S in ein zugeordnetes Aufnahmeloch 20 hineinragt. Die Längsachsen der Spannkörper 36 bilden mehrere Schnittpunkte in einer gemeinsamen Projektionsebene parallel zu der sich die Längsachsen L erstrecken. Bei einem bevorzugten Ausführungsbeispiel sind wenigstens drei oder vier Schnittpunkte gebildet. Insbesondere können vier Spannkörper 36 mit jeweils einer Längsachse L vorhanden sein, wobei vier Schnittpunkte gebildet sind, in denen sich jeweils zwei der vorhandenen Längsachsen L1, L2 bzw. L3, L4 bzw. L1, L3 bzw. L2, L4 schneiden.

### Bezugszeichenliste:

- 10: Werkstückhaltevorrichtung
- 11: Spannvorrichtung
- 12: Tragkörper
- 13: Halteseite
- 14: Anbringungsseite
- 15: Halteeinrichtung
- 16: Werkstück
- 17: Klemmbacke
- 18: Spannbolzen
- 19: konischer Endabschnitt
- 20: Aufnahmeloch
- 21: Stirnflächenaussparung
- 22: Beaufschlagungsfläche
- 23: konischer Abschnitt
- 24: sich verjüngender Abschnitt

- 28: Grundkörper
- 29: Spannseite
- 30: Anlagefläche
- 31: Gegenanlagefläche
- 32: Spannkörper
- 33: elastisch verformbares Element

- 36: Spannkörper
- 36a: erster Spannkörper
- 36b: zweiter Spannkörper
- 36c: dritter Spannkörper
- 36d: vierter Spannkörper
- 37: Führungskanal
- 38: Kanalwand
- 39: Kanalboden
- 40: Deckel
- 41: Deckelaufnahme
- 42: Führungswandabschnitt
- 43: Führungseinsatz

- 50: erste Spannkörpergruppe
- 51: zweite Spannkörpergruppe
- 52: Betätigungseinrichtung
- 53: Spannende
- 54: Spannfläche

- 57: Betätigungsschraube
- 58: Mutter
- 59: Hauptkörper
- 60: Hauptkörperfläche
- 61: Betätigungskörperendfläche
- 62: Betätigungskörper
- 63: Schrägfläche
- 64: Betätigungsende
- 65: Spannkörperendfläche

- 70: Vorspannanordnung
- 71: Vorspannelement

- A: Axialrichtung
- F: Freigabestellung
- FZ: Zugkraft
- FL: Längskraft
- FX: erste Kraftkomponente
- FY: zweite Kraftkomponente
- G1: erste Gerade
- G2: zweite Gerade
- L1: erste Längsachse
- L2: zweite Längsachse
- L3: dritte Längsachse
- L4: vierte Längsachse
- P1: erster Schnittpunkt
- P2: zweiter Schnittpunkt
- P3: dritter Schnittpunkt
- P4: vierter Schnittpunkt
- S: Spannstellung
- x: erste Richtung
- y: zweite Richtung
- z: dritte Richtung

## Patentansprüche

1. Spannvorrichtung (11) für das Spannen eines Tragkörpers (12),
mit einem Grundkörper (28), der an einer Spannseite (29) eine Anlagefläche (30) aufweist, und der mehrere zu der Spannseite (29) offene Aufnahmelöcher (20) aufweist, die zur Aufnahme jeweils eines Spannbolzens (18) des Tragkörpers (12) eingerichtet sind,
mit mehreren Spannkörpern (36), die in oder an dem Grundkörper (28) jeweils entlang ihrer Längsachse (L) linear bewegbar gelagert sind und mittels einer Betätigungseinrichtung (52) zwischen einer Spannstellung (S) und einer Freigabestellung (F) bewegbar sind,
**dadurch gekennzeichnet, dass**
die Längsachsen (L) der Spannkörper (36) mehrere Schnittpunkte (P1, P2, P3, P4) bilden.

2. Spannvorrichtung nach Anspruch 1,
**dadurch gekennzeichnet, dass** mehrere Spannkörpergruppen (50, 51) mit jeweils wenigstens oder genau zwei Spannkörpern (36) vorhanden sind.

3. Spannvorrichtung nach Anspruch 2,
**dadurch gekennzeichnet, dass** die Längsachsen (L) der Spannkörper (36) wenigstens oder genau vier Schnittpunkte (P1, P2, P3, P4) bilden.

4. Spannvorrichtung nach Anspruch 2 oder 3,
**dadurch gekennzeichnet, dass** zwei Längsachsen (L1, L2) der Spannkörper (36a, 36b) einer der Spannkörpergruppen (50) einen ersten Schnittpunkt (P1) bilden und zwei Längsachsen (L3, L4) der Spannkörper (36c, 36d) einer anderen Spannkörpergruppe (51) einen zweiten Schnittpunkt (P2) bilden.

5. Spannvorrichtung nach Anspruch 4,
**dadurch gekennzeichnet, dass** die Längsachse (L1) eines Spannkörpers (36a) einer der Spannkörpergruppen (50) mit der Längsachse (L3) eines Spannkörpers (36c) einer anderen Spannkörpergruppe (51) einen dritten Schnittpunkt (P3) bildet.

6. Spannvorrichtung nach Anspruch 5,
**dadurch gekennzeichnet, dass** zwei Längsachsen (L2, L4), von jeweils einem Spannkörper (36b, 36d) aus diesen Spannkörpergruppen (50, 51), die sich nicht durch den dritten Schnittpunkt (P3) erstrecken, einen vierten Schnittpunkt (P4) bilden.

7. Spannvorrichtung nach einem der vorhergehenden Ansprüche,
**dadurch gekennzeichnet, dass** die Betätigungseinrichtung (52) wenigstens einen bewegbar gelagerten Betätigungskörper (62) aufweist, wobei jeder Betätigungskörper (62) dazu eingerichtet ist, Betätigungsenden (64) mehrerer Spannkörper (36) einer gemeinsamen Spannkörpergruppe (50, 51) zu beaufschlagen, wobei die Längsachsen (L) der Spannkörper (36) einer gemeinsamen Spannkörpergruppe (50, 51) schräg zueinander ausgerichtet sind,

8. Spannvorrichtung nach einem der vorhergehenden Ansprüche,
**dadurch gekennzeichnet, dass** wenigstens eines der Aufnahmelöcher (20) in einer ersten Richtung (x) mit Abstand von einem der anderen Aufnahmelöcher (20) angeordnet ist, und/oder dass wenigstens eines der Aufnahmelöcher (20) in einer zur ersten Richtung (x) rechtwinkelig ausgerichteten zweiten Richtung (y) mit Abstand von einem der anderen Aufnahmelöcher (20) angeordnet ist.

9. Spannvorrichtung nach Anspruch 8,
**dadurch gekennzeichnet, dass** sich wenigstens eine Längsachse (L) eines Spannkörpers (36) oder alle Längsachsen (L) der Spannkörper (36) schräg zur ersten Richtung (x) als auch schräg zur zweiten Richtung (y) erstrecken.

10. Spannvorrichtung nach Anspruch 7, **dadurch gekennzeichnet, dass** die Betätigungseinrichtung (52) einen Hauptkörper (59) aufweist, der zur Beaufschlagung des wenigstens einen Betätigungskörpers (62) eingerichtet ist.

11. Spannvorrichtung nach einem der vorhergehenden Ansprüche,
**dadurch gekennzeichnet, dass** der Grundkörper (28) wenigstens einen Führungskanal (37) aufweist, wobei in jedem Führungskanal ein Spannkörper (36) angeordnet ist und der Führungskanal (37) an gegenüberliegenden Kanalwänden (38) jeweils einen Führungswandabschnitt (42) aufweist, an dem der Spannkörper (36) anliegt, und wobei die Kanalwände (38) außerhalb der Führungswandabschnitte (42) mit Abstand zum Spannkörper (36) angeordnet sind.

12. Spannvorrichtung nach Anspruch 11,
**dadurch gekennzeichnet, dass** sich die Kanalwände (38) des wenigstens einen Führungskanals (37) außerhalb der Führungswandabschnitte (42) parallel zueinander erstrecken.

13. Spannvorrichtung nach Anspruch 11 oder 12
**dadurch gekennzeichnet, dass** die Führungswandabschnitte (42) rinnenförmig ausgebildet sind.

14. Spannvorrichtung nach einem der vorhergehenden Ansprüche,
**dadurch gekennzeichnet, dass** eine Vorspannanordnung (70) vorhanden ist, die die Spannkörper (36) in die jeweilige Freigabestellung (F) drängt.

15. Werkstückhaltevorrichtung (10),
mit einem Tragkörper (12), der an einer Halteseite (13) eine Halteeinrichtung (15) für das Halten eines Werkstücks (16) trägt, und der an einer Anbringungsseite (14) eine Gegenanlagefläche (31) und mehrere von dem Tragkörper (12) weg ragende Spannbolzen (18) aufweist,
und mit einer Spannvorrichtung (11) nach einem der vorhergehenden Ansprüche.

## Claims

1. Clamping device (11) for clamping of a support body (12),
having a base body (28) that comprises an abutment surface (30) on a clamping side (29) and that comprises multiple receptacle holes (20) open toward the clamping side (29) that are configured for reception of one clamping bolt (18) of support body (12) in each case,
having multiple clamping bodies (36) that are linearly movably supported in or on the base body (28) along its longitudinal axis (L) respectively and that can be moved between a clamping position (S) and a release position (F) by means of an operating device (52),
**characterized in that** the longitudinal axes (L) of clamping bodies (36) define multiple points of intersection (P1, P2, P3, P4).

2. Clamping device according to claim 1, **characterized in that** multiple clamping body groups (50, 51) are provided having at least or exactly two clamping bodies (36) respectively.

3. Clamping device according to claim 2, **characterized in that** the longitudinal axes (L) of clamping bodies (36) define at least or exactly four points of intersection (P1, P2, P3, P4).

4. Clamping device according to claim 2 or 3, **characterized in that** two longitudinal axes (L1, L2) of clamping bodies (36a, 36b) of one of the clamping body groups (50) define a first intersection point (P1) and two longitudinal axes (L3, L4) of clamping bodies (36c, 36d) of another clamping body group (51) define a second intersection point (P2).

5. Clamping device according to claim 4, **characterized in that** the longitudinal axis (L1) of a clamping body (36a) of one of the clamping body groups (50) defines a third intersection point (P3) with the longitudinal axis (L3) of a clamping body (36c) of another clamping body group (51) .

6. Clamping device according to claim 5, **characterized in that** two longitudinal axes (L2, L4) of one clamping body (36b, 36d) respectively of these clamping body groups (50, 51) that do not extend through the third intersection point (P3) define a fourth intersection point (P4).

7. Clamping device according to any of the preceding claims, **characterized in that** the operating device (52) comprises at least one movably supported operating body (62), wherein each operating body (62) is configured to act on operating ends (64) of multiple clamping bodies (36) of a common clamping body group (50, 51), wherein the longitudinal axes (L) of the clamping bodies (36) of a common clamping body group (50, 51) are orientated obliquely to one another.

8. Clamping device according to any of the preceding claims, **characterized in that** at least one of the receptacle holes (20) is arranged with distance in a first direction (x) to one of the other receptacle holes (20) and/or that at least one of the receptacle holes (20) is arranged in a second direction (y) orthogonal to the first direction (x) with distance to one of the other receptacle holes (20).

9. Clamping device according to claim 8, **characterized in that** at least one longitudinal axis (L) of a clamping body (36) or all of the longitudinal axes (L) of clamping bodies (36) extend obliquely to the first direction (x) as well as obliquely to the second direction (y).

10. Clamping device according to claim 7, **characterized in that** the operating device (52) comprises a main body (59) that is configured for acting on the at least one operating body (62).

11. Clamping device according to any of the preceding claims, **characterized in that** base body (28) comprises at least one guide channel (37), wherein one clamping body (36) is arranged in each guide channel and the guide channel (37) comprises a guide wall section (42) on opposite channel walls (38) respectively against which the clamping body (36) abuts and wherein the channel walls (38) are arranged with distance to the clamping body (36) outside of guide wall sections (42).

12. Clamping device according to claim 11, **characterized in that** the channel walls (38) of the at least one guide channel (37) extend parallel to one another outside of guide wall sections (42).

13. Clamping device according to claim 11 or 12, **characterized in that** the guide wall sections (42) are configured in a trough-shaped manner.

14. Clamping device according to any of the preceding claims, **characterized in that** a biasing arrangement (70) is present that urges the clamping body (36) in the respective release position (F).

15. Workpiece holding device (10)
having a support body (12) supporting a holding device (15) for holding a workpiece (16) on a holding side (13) and that comprises a counter abutment surface (31) and multiple clamping bolts (18) projecting from the support body (12) on an attachment side (14),
and having a clamping device (11) according to any of the preceding claims.

## Revendications

1. Dispositif de serrage (11) destiné au serrage d'un corps de support (12),
comprenant un corps de base (28) qui présente une surface d'appui (30) sur une face de serrage (29) et qui présente plusieurs trous formant logements (20) ouverts du côté de la face de serrage (29) et conçus pour accueillir respectivement un goujon de serrage (18) du corps de support (12),
comprenant plusieurs corps de serrage (36) qui sont montés dans ou sur le corps de base (28) avec possibilité de déplacement linéaire, respectivement le long de leur axe longitudinal (L), et peuvent être déplacés entre une position de serrage (S) et une position de libération (F) à l'aide d'un dispositif d'actionnement (52),
**caractérisé en ce que** les axes longitudinaux (L) des corps de serrage (36) forment plusieurs points d'intersection (P1, P2, P3, P4).

2. Dispositif de serrage selon la revendication 1,
**caractérisé en ce qu'**il est prévu plusieurs groupes de corps de serrage (50, 51) qui comportent chacun au moins ou exactement deux corps de serrage (36).

3. Dispositif de serrage selon la revendication 2,
**caractérisé en ce que** les axes longitudinaux (L) des corps de serrage (36) forment au moins ou exactement quatre points d'intersection (P1, P2, P3, P4).

4. Dispositif de serrage selon la revendication 2 ou 3,
**caractérisé en ce que** deux axes longitudinaux (L1, L2) des corps de serrage (36a, 36b) de l'un des groupes de corps de serrage (50) forment un premier point d'intersection (P1), et deux axes longitudinaux (L3, L4) des corps de serrage (36c, 36d) d'un autre groupe de corps de serrage (51) forment un deuxième point d'intersection (P2).

5. Dispositif de serrage selon la revendication 4,
**caractérisé en ce que** l'axe longitudinal (L1) d'un corps de serrage (36a) de l'un des groupes de corps de serrage (50) forme un troisième point d'intersection (P3) avec l'axe longitudinal (L3) d'un corps de serrage (36c) d'un autre groupe de corps de serrage (51).

6. Dispositif de serrage selon la revendication 5,
**caractérisé en ce que** deux axes longitudinaux (L2, L4) respectivement d'un corps de serrage (36b, 36d) de ces groupes de corps de serrage (50, 51), qui ne passent pas par le troisième point d'intersection (P3), forment un quatrième point d'intersection (P4).

7. Dispositif de serrage selon l'une des revendications précédentes,
**caractérisé en ce que** le dispositif d'actionnement (52) présente au moins un corps d'actionnement (62) monté de façon mobile, chaque corps d'actionnement (62) étant conçu pour solliciter des extrémités d'actionnement (64) de plusieurs corps de serrage (36) d'un même groupe de corps de serrage (50, 51), les axes longitudinaux (L) des corps de serrage (36) d'un même groupe de corps de serrage (50, 51) étant orientés en biais les uns par rapport aux autres.

8. Dispositif de serrage selon l'une des revendications précédentes,
**caractérisé en ce qu'**au moins un des trous formant logements (20) est disposé à distance de l'un des autres trous formant logements (20), dans une première direction (x), et/ou **en ce qu'**au moins un des trous formant logements (20) est disposé à distance de l'un des autres trous formant logements (20), dans une deuxième direction (y) orientée à angle droit par rapport à la première direction (x).

9. Dispositif de serrage selon la revendication 8,
**caractérisé en ce qu'**au moins un axe longitudinal (L) d'un corps de serrage (36) ou tous les axes longitudinaux (L) des corps de serrage (36) s'étendent en biais par rapport à la première direction (x) et s'étendent également en biais par rapport à la deuxième direction (y).

10. Dispositif de serrage selon la revendication 7,
**caractérisé en ce que** le dispositif d'actionnement (52) présente un corps principal (59) qui est conçu pour l'actionnement du corps d'actionnement (62), au nombre d'au moins un.

11. Dispositif de serrage selon l'une des revendications précédentes,
**caractérisé en ce que** le corps de base (28) présente au moins un canal de guidage (37), un corps de serrage (36) étant disposé dans chaque canal de guidage et le canal de guidage (37) présentant, sur des parois de canal (38) opposées, respectivement une portion de paroi de guidage (42) contre laquelle est appliqué le corps de serrage (36), et, à l'extérieur des portions de paroi de guidage (42), les parois de canal (38) étant disposées à distance du corps de serrage (36).

12. Dispositif de serrage selon la revendication 11,
**caractérisé en ce qu'**à l'extérieur des portions de paroi de guidage (42), les parois de canal (38) du canal de guidage (37), au nombre d'au moins un, s'étendent parallèlement l'une à l'autre.

13. Dispositif de serrage selon la revendication 11 ou 12,
**caractérisé en ce que** les parties de paroi de guidage (42) sont réalisées sous forme de gouttière.

14. Dispositif de serrage selon l'une des revendications précédentes,
**caractérisé en ce qu'**il est prévu un dispositif de précontrainte (70) qui pousse les corps de serrage (36) dans la position de libération (F) respective.

15. Dispositif porte-pièce (10),
comprenant un corps de support (12) qui porte, sur une face de maintien (13), un dispositif de support (15) destiné à tenir une pièce à usiner (16), et qui présente, sur une face de fixation (14), une surface d'appui antagoniste (31) et plusieurs goujons de serrage (18) s'étendant à partir du corps de support (12),
et comprenant un dispositif de serrage (11) selon l'une des revendications précédentes.
